# EUROPÄISCHE PATENTSCHRIFT

(11) **EP 0 754 822 B1**
(45) Veröffentlichungstag und Bekanntmachung des Hinweises auf die Patenterteilung: **31.05.2000**
(21) Anmeldenummer: 95111227.5
(22) Anmeldetag: 18.07.1995
(51) Int. Cl.: E04H 9/14, E02B 7/00

(54) **Vorrichtung zum Abschotten von Räumen; ohne Auslösemechanismus**
Device for barricading rooms; without unlocking mechanism
Dispositif pour barricader des espaces; sans mécanisme de déblocage

(43) Veröffentlichungstag der Anmeldung: 22.01.1997
(73) Patentinhaber: Anhamm, Helmut, 47443 Moers (DE)
(72) Erfinder: Anhamm, Helmut, 47443 Moers (DE)
(74) Vertreter: Kahlhöfer, Hermann, Dipl.-Phys.

(56) Entgegenhaltungen:
- CH-A- 199 124
- DE-A- 3 808 575
- DE-C- 484 961
- DE-C- 519 510
- FR-A- 2 531 475

## Beschreibung

Die Erfindung betrifft eine Vorrichtung zum Abschotten eines Raumes gegen eine in den Raum eintretende oder aus dem Raum austretende Flüssigkeit mit den Merkmalen des Oberbegriffs des Anspruchs 1 bzw. des Anspruchs 6.

Es ist bekannt eine Tür eines Raumes, insbesondere eines Betriebes durch Klappen abzuschotten, die bei anfallender Flüssigkeit aller Art auf dem Boden des Raumes schließen, so daß Nachbarräume oder die Umgebung des Raumes mit den Flüssigkeiten, die häufig Chemikalien oder Öle enthalten, nicht in Berührung kommen. Wassermengen Chemikalien oder Öle fallen insbesondere dann an, wenn Löschwasser durch die Feuerwehr oder durch Sprinkleranlagen in den Raum gepumpt wird.

Eine Vorrichtung der vorgenannten Art ist aus der DE 3808575 A1 bekannt. Dort ist eine Vorrichtung zum Abschotten eines Raumes gegen eine in den Raum eintretende oder austretende, insbesondere mit Schadstoffen beladende Flüssigkeit, genannt. Im Boden des Raumes wird ein Behälter eingelassen und eine an diesem angelenkte Klappe, die den Behälter in Ruhestellung verschließt und von einem Antrieb in den abzuschottenden Raum hochklappbar ist. Dieser Antrieb besteht in der angegebenen Schrift aus einem Hydraulikzylinder, der am Gehäuse einer Pumpe schwenkbar gelagert ist, und dessen Kolbenstange an der Unterseite der Klappe angelegt wird. Läuft Flüssigkeit in das Innere des Behälters und betätigt dort eine Steuereinrichtung, beispielsweise durch Schließen eines Flüssigkeitskontaktes, setzt die Steuereinrichtung den Antrieb in Gang, der die Klappe aus ihrer horizontalen Lage in die vertikale Stellung schwenkt, in der die Klappe die Türöffnung im unteren Bereich verschließt.

Nachteilig bei der bekannten Vorrichtung sind die aufwendigen, anfälligen Auslösemechanismen, die hydraulisch, pneumatisch oder elektrisch gesteuert werden, und einen nicht unerheblichen Unsicherheitsfaktor in der Funktionssicherheit und Funktionszuverlässigkeit im Schadensfall darstellen. Besonders in dem Fall, daß erst ein Brand in dem Raumaustritt, und nach einer Weile erst die Flüssigkeit durch die Feuerwehr oder Sprinkleranlagen in den Raum gepumpt wird. Bis zu diesem Zeitpunkt ist der Auslösemechanismus, dazu gehört die genannte Steuereinrichtung, der Hydraulikzylinder mit einer Kolbenstange und einer Pumpe; einer Hitze ausgesetzt , die die gesamte Funktion des hydraulischen Auslösemechnismusses außer Kraft setzt. Bei Versagen der Steuereinrichtung bzw. gesamten Auslösemachnismusses ist es nicht möglich, die genannte Vorrichtung schnell per Hand zu schließen oder ohne den Auslösemechanismus nachträglich zu aktivieren. Das Abschotten der Räume muß schnell und unkompliziert passieren, bevor kontaminierte Flüssigkeit den Raum verlassen kann.

Desweiteren ist es bei der bestehenden Vorrichtung von Nachteil, daß die Vorrichtung zwangsweise schließt, d.h. selbst bei geringer Wassermenge, z.B. Putzwasser oder einlaufendes Regenwasser von außen wird der Antrieb durch die Steuereinrichtung in Gang gesetzt, so daß die Öffnungen des Raumes schnell und unnötig verschlossen werden. Die Aus- und Zugänge des Raumes werden so verschlossen, daß kein Verkehr mehr, rein oder raus, stattfinden kann, obwohl kein Schadensfall vorliegt.

Ebenfalls nachteilig bei der bestehenden Vorrichtung ist es, daß der Auslösemechanismus in dem Behälter einen Platz beansprucht, der eine gewisse Größe des Behälters notwendig macht, die eine Tiefe Einbauhöhe des Behälters voraussetzt. Durch die notwendige Einbauhöhe des Behälters wird die Einsatz möglichkeit der Vorrichtung insofern eingeschränkt, daß die Vorrichtung aus statischen Problemen nicht in Decken und eingeschränkt in bestehende Gebäude nachträglich eingebaut werden kann.

Davon ausgehend liegt der Erfindung die Aufgabe zu Grunde, eine Vorrichtung der eingangs genannten Art so zu verbessern, daß bei einfacher, flacher Konstruktion und einfacher Montage eine sichere Funktion bei anfallender Flüssigkeit erreicht wird, ohne einen Auslösemechanismus zu benötigen.

Diese Aufgabe wird erfindungsgemäß durch eine Vorrichtung zum Abschotten eines Raumes gegen eine in den Raum eintretende Flüssigkeit mit den Merkmalen des Anspruchs 1 bzw. mit den Merkmalen des Anspruchs 6 gelöst. Vorteilhafte Weiterbildungen und Ausgestaltungen sind Gegenstand der Unteransprüche.

Bei einer ersten erfindungsgemäßen Ausgestaltung der Vorrichtung zum Abschotten eines Raumes gegen eine in den Raum eintretende Flüssigkeit wird vorgeschlagen, daß die Klappe als ein Schwimmkörper ausgebildet ist. Die Klappe ist aus einer im Boden des Raumes ausgebildeten Ausnehmung in Abhängigkeit von einer in die Ausnehmung eintretenden Flüssigkeit durch einen Antrieb hoch klappbar. Der Antrieb weist wenigstens ein im wesentlichen vertikal bewegliches Gewicht auf, das über ein Getriebe mit der Achse, die im wesentlichen horizontal verläuft, verbunden ist. Das Gewicht bewirkt um die Drehachse ein Drehmoment, welches größer ist als ein durch die Gewichtskraft der Klappe um die Achse wirkendes Drehmoment, wenn die Klappe durch die in die Ausnehmung eintretende Flüssigkeit aus ihrer im wesentliche horizontalen Lage in der Ausnehmung ausgelenkt wird.

Gemäß einer anderen erfinderischen Ausgestaltung der Vorrichtung wird vorgeschlagen, daß die Klappe als Schwimmkörper ausgebildet ist und der Antrieb wenigstens eine Zugfeder aufweist, die über ein Getriebe mit der Achse verbunden ist und ein Drehmoment um die Drehachse bewirkt, das größer ist als ein durch die Gewichtskraft der Klappe um die Achse wirkendes Drehmoment, wenn die Klappe durch die in die Ausnehmung eintretende Flüssigkeit aus ihrer im wesentlichen horizontalen Lage in der Ausnehmung ausgelenkt worden ist.

Eine solche Vorrichtung wird mechanisch allein durch die ankommende Flüssigkeit, insbesondere Wasser, betätigt, ohne eine zusätzliche Energie wie Elektrizität, Pneumatik oder Hydraulik als Auslösemachanismus zu benötigen. Die Klappe ist als Schwimmkörper ausgerichtet, der bei eintretender Flüssigkeit in die untere Wanne, aufgetrieben wird. Allein das Gewicht/die Gewichte bzw. die Feder(n) schließen die Klappe, sobald sie durch die Flüssigkeit etwas angehoben wird. Damit wird eine hohe Zuverlässigkeit unabhängig von anderen Vorrichtungen erreicht.

Die geschlossene Klappe wird in eine Schließstellung gegen umlaufende Dichtungen gedrückt, die sich rechts und links des Türrahmens, sowie vor der Türschwelle, befinden. Die Dichtungen sind in Befestigungsrahmen angebracht, die mit der unteren Wanne eine Baueinheit bilden. Darin liegt der Vorteil, daß die Dichtungen auf Grund ihrer Befestigungsweise in dem Befestigungsrahmen leicht auswechselbar sind, damit die hohe Dichtigkeit erhalten bleibt.

Besonders vorteilhaft ist hierbei die einfache Konstruktion und Handhabung als auch die hohe Dichtigkeit im geschlossenen Zustand. Die Klappe, die in einer Sandwichbauweise gefertigt wird, in dem der Kern der Klappe mit einem extrem druckfestem und leichtem Material ausgestattet ist, läßt somit eine hohe Belastbarkeit der Klappe im geöffneten Zustand durch Stapler- und LKW-Verkehr zu. Die Klappe liegt in der unteren Wanne auf dem Wannenboden ein. Die Einbautiefe der Wanne ist identisch mit der Dicke der Klappe. Durch die Einsparung des Auslösemechanismus und die Schwimmfähigkeit der Klappe, variiert die Einbautiefe der Vorrichtung zwischen 50 bis 200 mm, d.h. das die Nachrüstung bestehender Gebäude mit dieser Vorrichtung als Sicherheitseinrichtung statisch kein Problem mehr darstellt.

Eine besonders platzsparende Bauweise wird erreicht, wenn das Gewicht eine größere Höhe als Breite oder die Feder eine größere Länge als Durchmesser aufweist und in einem senkrechten Gehäuse geführt wird, das seitlich der Klappe, insbesondere seitlich einer Tür/eines Tores, befestigt ist.

Besonders vorteilhaft ist es, wenn zu beiden Seiten der Klappe ein Gewicht oder eine Feder angeordnet ist, das auf je einem Hebelende der Klappe aufliegt bzw. festgespannt ist. Hierdurch wird eine optimale Verteilung der Kräfte bei geringerem Raumbedarf für die Gewichte bzw. Federn erreicht. Eine besonders hohe Funktionssicherheit bei geringer Reibung wird geschaffen, wenn am Hebelende eine Rolle gelagert ist, auf der die Unterseite des Gewichts aufliegt.

Besonders vorteilhaft ist es, wenn das wenigstens eine Gewichte oder wenigstens die Feder so bemessen ist, das bei waagerecht liegender Klappe, diese in ihrem Gesamtgewicht nicht ausreichen, um die Klappe anzuheben, aber bei durch die Flüssigkeit etwas angehobener Klappe, diese durch das Gesamtgewicht anhebbar ist. Hierdurch wird die hohe Funktionssicherheit gewährleistet, und ein schnelles und zu frühes Schließen der Klappe ausgeschaltet. Selbst wenn sich etwas Flüssigkeit, z.B. Putzwasser oder von außen eintretendes Regenwasser, in der unteren Wanne befindet und die Klappe dadurch etwas angehoben wurde, ist der Zugang in und aus dem Raum nicht versperrt, denn die Klappe kann weiterhin befahren und übergangen werden.

Besonders vorteilhaft ist es, daß die Klappe auf Grund ihrer einfachen Konstruktion und Handhabung, sekundenschnell per Hand vom geöffneten Zustand; waagerechte Grundstellung, in den geschlossenen Zustand; Schließstellung; gebracht werden kann., ohne einen Auslösemechanismus in Gang zu setzen. Ebenfalls ist eine unproblematische und sekundenschnelle Öffnung der Schließstellung in die Grundstellung, waagerechte Lage der Klappe, ebenfalls per Hand möglich.

Desweiteren ist die Sandwichbauweise der Klappe insofern von großem Vorteil, da die Klappe dadurch unempflindlicher gegenüber Hitzeeinwirkungen im Falle eines Brandes wird als wenn die Klappe komplett aus einem Material bestände. Selbst bei mehrminütiger Hitzeeinwirkung auf die Klappe, ist die Funktionsfähigkeit der Klappe nicht eingeschränkt. Die Funktionssicherheit bei einlaufendem Löschwasser ist im Schadensfall weiterhin gegeben.

Weitere Vorteile und Einzelheiten der Vorrichtung zum Abschotten eines Raumes werden anhand der in der Zeichnung dargestellten Ausführungsbeispiele erläutert. Es zeigen:
- Fig. 1: schematisch und im Schnitt ein erstes Ausführungsbeispiel einer Vorrichtung und
- Fig. 2: schematisch und im Schnitt ein zweites Ausführungsbeispiel einer Vorrichtung zum Abschotten eines Raumes.

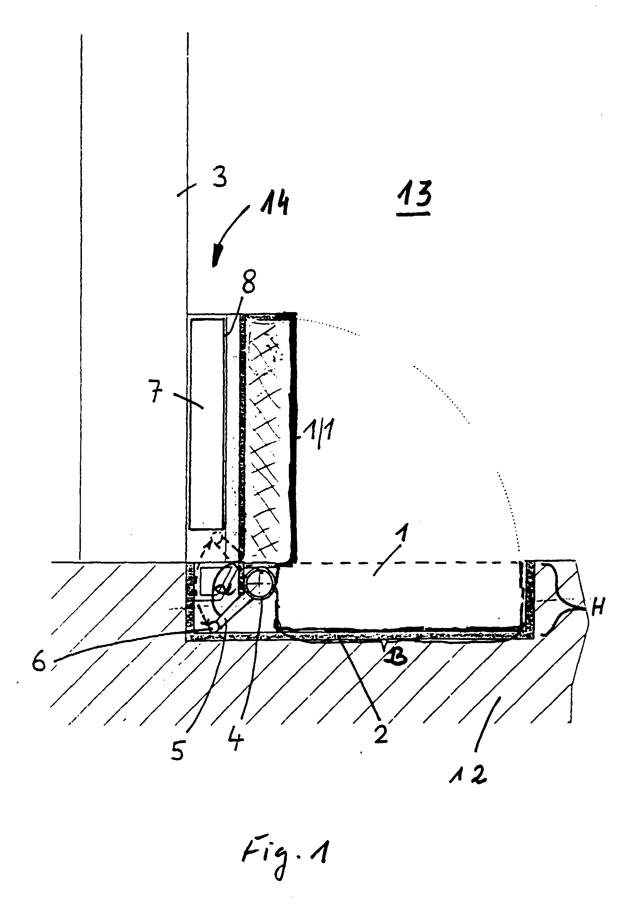

Fig. 1 zeigt ein erstes Ausführungsbeispiel einer Vorrichtung zum Abschotten eines Raumes in einem senkrechten Schnitt.

Die Klappe 1 wird in einer Sandwichbauweise gefertigt, in dem der Kern der Klappe 1 mit einem extrem leichten und druckfestem Material ausgestattet ist, der eine hohe Belastbarkeit der Klappe zuläßt. Die Klappe 1 weist in der Regel eine größere Länge L als Breite B auf und liegt in einer kastenförmigen Wanne 2 ein, die eine geringere Höhe H als Breite B oder Länge L besitzt. Die Oberseite der Klappe 1 schließt mit der Oberseite der Wanne 2 ab, wenn die Klappe 1 sich in der waagerechten Grundstellung befindet. In der Regel ist die Wanne 2 vor einer Tür angeordnet, von der der Türrahmen 3 dargestellt ist. Wird die Klappe 1 in die senkrechte Stellung die Schließstellung angehoben, so kann durch die Türöffnung keine Flüssigkeit mehr in den benachbarten Raum oder in die Umgebung des Raumes fließen.

Die Klappe 1 ist um eine waagerechte Achse 4 verschwenkbar, die an der Längsseite der Klappe 1 angeordnet ist. An der Achse 4 oder an den seitlichen Achsstummeln, bzw. Wellen der Klappe 1 ist zu beiden Seiten der Klappe 1 jeweils ein Hebel 5 radial befestigt, der sich von der Klappe 1 in einem Winkel α wegstreckt, der mit der Klappe 1 einen Winkel von max. 45 Grad bildet. Das Ende des Hebels 5 trägt eine Rolle 6 auf der ein Gewicht 7 aufliegt, das in einem seitlich des Türrahmens 3 angeordneten Kasten 8 senkrecht verschiebbar ist.

Hierbei ist das Gewicht 7 säulenförmig mit einem rechteckigem oder rundem waagerechten Querschnitt. Entsprechend ist das Kasten 8 geformt, in dem das Gewicht 7 senkrecht gleitend einliegt. In der gestrichelt gezeichneten Grundstellung der Klappe 1 nimmt der Hebel 5 die gestrichelt dargestellt Stellung ein, und das Gewicht 7 befindet sich in der oberen dargestellten Stellung. Statt einem Gewicht 7 können auch zwei oder mehrere Gewichte 7 zu beiden Seiten des Türrahmens 3 und damit zu beiden Seiten der Klappe 1 angeordnet sein.

Das Gewicht oder die Gewichte 7 reichen in der Grundstellung der Klappe 1 nicht aus, um diese in die senkrechte Schließstellung anzuheben. Erst wenn die Klappe 1 um mehrere Grad angehoben wurde, gelingt es dem Gewicht oder den Gewichten 7, diese weiter in die senkrechte Schließstellung anzuheben.

Dieses anfängliche Anheben der Klappe 1 erfolgt durch in die Wanne 2 einfließende Flüssigkeit, insbesondere Wasser. Die durch die Flüssigkeitsverdrängung entstehende Auftriebskraft hebt die Klappe 1 in die Stellung, in der das oder die Gewicht(e) 7 dann die Klappe 1 weiter anheben können, somit reicht die Anwesenheit von Flüssigkeit in der Wanne aus, um ein Abschotten zu erzeugen.

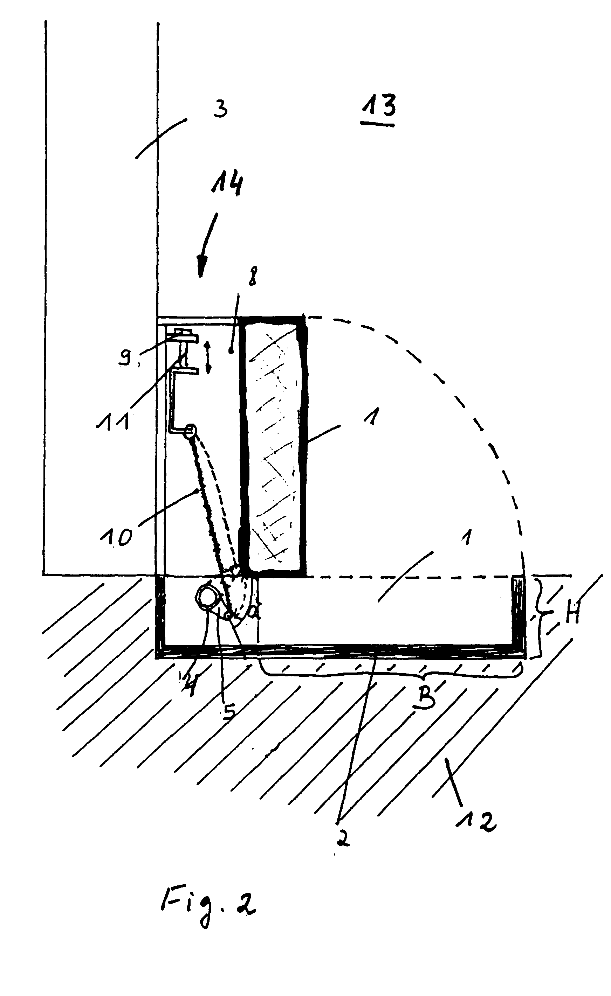

Fig. 2 zeigt ein zweites Ausführungsbeispiel einer Vorrichtung zum Abschotten eines Raumes 13 gegen eine in den Raum 13 eintretende oder aus dem Raum 13 austretende Flüssigkeit

Die Klappe 1 wird in einer Sandwichbauweise gefertigt, in dem der Kern der Klappe mit einem extrem leichtem und druckfestem Material ausgestattet ist, der eine hohe Belastbarkeit der Klappe 1 zuläßt Die Klappe 1 weist in der Regel eine größere Länge L als Breite B auf und liegt in einer kastenförmigen Wanne 2 ein, die eine geringere Höhe H als Breite B oder Länge L besitzt. Die Oberseite der Klappe 1 schließt mit der Oberkante der Wanne 2 ab, wenn sich die Klappe 1 in der waagerechten Grundstellung befindet. In der Regel ist die Wanne 2 vor einer Tür angeordnet, von der der Türrahmen 3 dargestellt ist. Wird die Klappe 1 in die senkrechte Stellung, der Schließstellung angehoben, so kann durch die Türöffnung keine Flüssigkeit mehr in den benachbarten Raum oder in die Umgebung des Raumes fließen. Die Klappe 1 ist aus einer im Boden 12 des Raumes 13 ausgebildeten Ausnehmung 2 in Abhängigkeit von einer in die Ausnehmung 2 eintretenden Flüssigkeit durch einen Antrieb 14 hochklappbar ist.

Die Klappe 1 ist um eine waagerechte Achse 4 verschwenkbar, die an der Längsseite der Klappe 1 angeordnet, die der Tür zugewandt ist. An der Achse 4 oder an seitlichen Achsstummeln, bzw. Wellen der Klappe 1 ist zu beiden Seiten der Klappe 1 jeweils ein Hebel 6 radial befestigt, der sich von der Klappe 1 in einem Winkel α wegstreckt, der mit der Klappe 1 einen Winkel von max. 45 Grad bildet.

Das Ende des Hebels 5 trägt einen Bolzen 9 an der eine Feder 10 zieht, die in einem seitlich des Türrahmens 3 angeordneten Kasten 8 senkrecht verschiebbar ist.

Hierbei ist die Feder 10 in einem säulenförmigen Kasten untergebracht. Entsprechend ist das Gehäuse 8 geformt, in dem die Feder 10 senkrecht eingebaut ist. In der gestrichelt gezeichneten Grundstellung der Klappe 1 nimmt der Hebel 5 die gestrichelt dargestellte Stellung ein, und die Feder 10 ist in der gestrichelt dargestellten Stellung vorgespannt, die in dem oberen Teil des Gehäuses 8 an einem verschiebbaren Befestigungsbolzen 9 befestigt ist. Der obere Befestigungsbolzen 9 ist durch eine Gewindespindel 11 so zu verstellen, daß eine optimale Einstellung der Schließkraft erzeugt werden kann. Statt der Feder 10 können auch zwei oder mehrere Federn 10 zu beiden Seiten der Tür- bzw. Torrahmen 3 und damit zu beiden Seiten der Klappe 1 angeordnet sein.

Die Zugkraft der Feder(n) 10 reicht in der Grundstellung der Klappe 1 nicht aus, um diese in die waagerechte Schließstellung anzuheben. Erst wenn die Klappe 1 um mehrere Grad angehoben wurde, gelingt es der Feder oder den Federn 10, diese weiter in die senkrechte Schließstellung anzuheben.

Dieses anfängliche Anheben der Klappe 1 erfolgt durch in die Wanne 2 einfließende Flüssigkeit, insbesondere Wasser. Die durch die Flüssigkeitsverdrängung entstehende Auftriebskraft hebt die Klappe 1 in die Stellung, in der die Feder(n) 10 dann die Klappe 1 weiter zuziehen können, somit reicht die Anwesenheit von Flüssigkeit in der Wanne aus, um ein Abschotten zu erzeugen.

## Patentansprüche

1. Vorrichtung zum Abschotten eines Raumes gegen eine in den Raum eintretende oder aus dem Raum austretende Flüssigkeit mit einer um eine im wesentlichen horizontale Achse (4) verschwenkbaren, im wesentlichen horizontal angeordneten, Klappe (1), die aus einer im Boden (12) des Raumes (13) ausgebildeten Ausnehmung (2) in Abhängigkeit von einer in die Ausnehmung (2) eintretenden Flüssigkeit durch einen Antrieb (14) hochklappbar ist, dadurch gekennzeichnet, daß die Klappe (1) als ein Schwimmkörper ausgebildet ist und der Antrieb (14) wenigstens ein im wesentlichen vertikal bewegliches Gewicht (7) aufweist, das über ein Getriebe mit der Achse (4) verbunden ist, und ein Drehmoment um die Drehachse (4) bewirkt, welches größer ist als ein durch die Gewichtskraft der Klappe (1) um die Achse (4) wirkendes Drehmoment, wenn die Klappe (1) durch die in die Ausnehmung (2) eingetretene Flüssigkeit aus ihrer im wesentlichen horizontalen Lage in der Ausnehmung (2) ausgelenkt worden ist.

2. Vorrichtung nach Anspruch 1, dadurch gekennzeichnet, daß ein im wesentlichen quer zur Achse (4) verlaufender Hebel (5) mit der Achse (4) und mit einem Gewicht (7) verbunden ist.

3. Vorrichtung nach Anspruch 2, dadurch gekennzeichnet, daß das Gewicht (7) auf einem freien Ende des Hebels (5) aufliegt.

4. Vorrichtung nach Anspruch 3, dadurch gekennzeichnet, daß am freien Ende des Hebels (5) eine drehbar gelagerte Rolle (6) angeordnet ist, auf der eine Unterseite des Gewichts (7) aufliegt.

5. Vorrichtung nach einem der Ansprüche 1 bis 4, dadurch gekennzeichnet, daß beidseits der Klappe (1) jeweils wenigstens ein im wesentlichen vertikal bewegliches Gewicht (7) vorgesehen ist, das mit der Achse (4) verbunden ist.

6. Vorrichtung zum Abschotten eines Raumes gegen eine in den Raum eintretende oder aus dem Raum austretende Flüssigkeit mit einer um eine im wesentlichen horizontale Achse (4) verschwenkbaren, im wesentlichen horizontal angeordneten, Klappe (1), die aus einer im Boden (12) des Raumes (13) ausgebildeten Ausnehmung (2) in Abhängigkeit von einer in die Ausnehmung (2) eintretenden Flüssigkeit durch einen Antrieb (14) hochklappbar ist, dadurch gekennzeichnet, daß die Klappe (1) als ein Schwimmkörper ausgebildet ist und der Antrieb (14) wenigstens eine Zugfeder (10) aufweist, die über ein Getriebe mit der Achse (4) verbunden ist und ein Drehmoment um die Drehachse (4) bewirkt, welches größer ist als ein durch die Gewichtskraft der Klappe (1) um die Achse (4) wirkendes Drehmoment, wenn die Klappe (1) durch die in die Ausnehmung (2) eingetretene Flüssigkeit aus ihrer im wesentlichen horizontalen Lage in der Ausnehmung (2) ausgelenkt worden ist.

7. Vorrichtung nach Anspruch 6, dadurch gekennzeichnet, daß die wenigstens eine Zugfeder (10) über einen im wesentlichen quer zur Achse (4) verlaufenden Hebel (5) mit der Achse (4) verbunden ist.

8. Vorrichtung nach Anspruch 7, dadurch gekennzeichnet, daß die wenigstens eine Zugfeder (10) an einem freien Ende des Hebels (5) angreift.

9. Vorrichtung nach Anspruch 6, 7 oder 8, dadurch gekennzeichnet, daß die Zugfeder (10) mit einer Vorspannung an dem Hebel (4) angreift.

10. Vorrichtung nach Anspruch 9, dadurch gekennzeichnet, daß die Vorspannung der Zugfeder (10) einstellbar ist.

11. Vorrichtung nach Anspruch 10, dadurch gekennzeichnet, daß zur Einstellung der Vorspannung der Zugfeder (10) eine mit der Zugfeder (10) verbundene Gewindespindel (11) vorgesehen ist.

12. Vorrichtung nach einem der Ansprüche 6 bis 11, dadurch gekennzeichnet, daß beidseits der Klappe (1) jeweils wenigstens eine Zugfeder (10) mit der Achse (4) verbunden ist.

13. Vorrichtung nach einem der Ansprüche 1 bis 12, dadurch gekennzeichnet, daß die Klappe (1) in einer Sandwichbauweise ausgebildet ist, wobei die Klappe (1) einen druckfesten Kern aufweist.

## Claims

1. Apparatus for partitioning off a room in relation to a liquid passing into the room or issuing from the room, comprising a substantially horizontally arranged flap (1) which is pivotable about a substantially horizontal axis (4) and which can be pivoted upwardly by a drive (14) from a recess (2) in the floor (12) of the room (13) in dependence on a liquid passing into the recess (2), characterised in that the flap (1) is in the form of a float and the drive (14) has at least one substantially vertically movable weight (7) which is connected to the axis (4) by way of a transmission means and produces a torque about the rotary axis (4) which is greater than a torque acting about the axis (4) due to the force produced by the weight of the flap (1) when the flap (1) has been deflected out of its substantially horizontal position in the recess (2) by the liquid which has passed into the recess (2).

2. Apparatus according to claim 1 characterised in that a lever (5) extending substantially transversely with respect to the axis (4) is connected to the axis (4) and to a weight (7).

3. Apparatus according to claim 2 characterised in that the weight (7) rests on a free end of the lever (5).

4. Apparatus according to claim 3 characterised in that arranged at the free end of the lever (5) is a rotatably mounted roller (6) on which an underside of the weight (7) rests.

5. Apparatus according to one of claims 1 to 4 characterised in that provided on each of the two sides of the flap (1) is at least one respective substantially vertically movable weight (7) which is connected to the axis (4).

6. Apparatus for partitioning off a room in relation to a liquid passing into the room or issuing from the room, comprising a substantially horizontally arranged flap (1) which is pivotable about a substantially horizontal axis (4) and which can be pivoted upwardly by a drive (14) from a recess (2) in the floor (12) of the room (13) in dependence on a liquid passing into the recess (2), characterised in that the flap (1) is in the form of a float and the drive (14) has at least one tension spring (10) which is connected to the axis (4) by way of a transmission means and produces a torque about the rotary axis (4) which is greater than a torque acting about the axis (4) due to the force produced by the weight of the flap (1) when the flap (1) has been deflected out of its substantially horizontal position in the recess (2) by the liquid which has passed into the recess (2).

7. Apparatus according to claim 6 characterised in that the at least one tension spring (10) is connected to the axis (4) by way of a lever (5) extending substantially transversely with respect to the axis (4).

8. Apparatus according to claim 7 characterised in that the at least one tension spring (10) engages a free end of the lever (5).

9. Apparatus according to claim 6, claim 7 or claim 8 characterised in that the tension spring (10) engages the lever (4) with a biasing force.

10. Apparatus according to claim 9 characterised in that the biasing force of the tension spring (10) is adjustable.

11. Apparatus according to claim 10 characterised in that there is provided a screwthreaded spindle (11) connected to the tension spring (10) for adjusting the biasing force of the tension spring (10).

12. Apparatus according to one of claims 6 to 11 characterised in that on each of the two sides of the flap (1) at least one respective tension spring (10) is connected to the axis (4).

13. Apparatus according to one of claims 1 to 12 characterised in that the flap (1) is of a sandwich structure, the flap (1) having a pressure-resistant core.

## Revendications

1. Dispositif de cloisonnement étanche d'une pièce vis-à-vis d'un liquide entrant dans la pièce ou sortant de la pièce, comportant un volet (1) qui est pivotant autour d'un axe (4) globalement horizontal, qui est agencé globalement à l'horizontale et qui est relevable par un dispositif d'entraînement (14), hors d'un évidement (2) conçu dans le sol (12) de la pièce (13), en fonction d'un liquide entrant dans l'évidement (2), caractérisé en ce que le volet (1) est conçu comme un corps flottant et le dispositif d'entraînement (14) comporte au moins un poids (7), qui est mobile globalement verticalement, qui est relié à l'axe (4) par l'intermédiaire d'un mécanisme et qui crée autour de l'axe de rotation (4) un couple qui est plus grand qu'un couple agissant autour de l'axe (4) à cause du poids du volet (1) lorsque le volet (1) a été sorti de sa position globalement horizontale dans l'évidement (2) par le liquide qui est entré dans l'évidement (2).

2. Dispositif selon la revendication 1, caractérisé en ce qu'un levier (5) s'étendant globalement transversalement par rapport à l'axe (4) est relié à l'axe (4) et à un poids (7).

3. Dispositif selon la revendication 2, caractérisé en ce que le poids (7) repose sur une extrémité libre du levier (5).

4. Dispositif selon la revendication 3, caractérisé en ce qu'il est agencé à l'extrémité libre du levier (5) un galet (6) qui est monté rotatif et sur lequel repose le dessous du poids (7).

5. Dispositif selon l'une des revendications 1 à 4, caractérisé en ce qu'il est prévu des deux côtés du volet (1) à chaque fois au moins un poids (7) qui est mobile globalement verticalement et qui est relié à l'axe (4).

6. Dispositif de cloisonnement étanche d'une pièce vis-à-vis d'un liquide entrant dans la pièce ou sortant de la pièce, comportant un volet (1) qui est pivotant autour d'un axe (4) globalement horizontal, qui est agencé globalement à l'horizontale et qui est relevable par un dispositif d'entraînement (14), hors d'un évidement (2) conçu dans le sol (12) de la pièce (13), en fonction d'un liquide entrant dans l'évidement (2), caractérisé en ce que le volet (1) est conçu comme un corps flottant et le dispositif d'entraînement (14) comporte au moins un ressort de traction (10) qui est relié à l'axe (4) par l'intermédiaire d'un mécanisme et qui crée autour de l'axe de rotation (4) un couple qui est plus grand qu'un couple agissant autour de l'axe (4) à cause du poids du volet (1) lorsque le volet (1) a été sorti de sa position globalement horizontale dans l'évidement (2) par le liquide qui est entré dans l'évidement (2).

7. Dispositif selon la revendication 6, caractérisé en ce que le ou les ressorts de traction (10) sont reliés à l'axe (4) par l'intermédiaire d'un levier (5) s'étendant globalement transversalement par rapport à l'axe (4).

8. Dispositif selon la revendication 7, caractérisé en ce que le ou les ressorts de traction (10) agissent sur une extrémité libre du levier (5).

9. Dispositif selon la revendication 6, 7 ou 8, caractérisé en ce que le ressort de traction (10) agit avec une précontrainte sur le levier (4).

10. Dispositif selon la revendication 9, caractérisé en ce que la précontrainte du ressort de traction (10) est réglable.

11. Dispositif selon la revendication 10, caractérisé en ce que, pour régler la précontrainte du ressort de traction (10), il est prévu une tige filetée (11) reliée au ressort de traction (10).

12. Dispositif selon l'une des revendications 6 à 11, caractérisé en ce que, des deux côtés du volet (1), à chaque fois au moins un ressort de traction (10) est relié à l'axe (4).

13. Dispositif selon l'une des revendications 1 à 12, caractérisé en ce que le volet (1) est conçu selon une construction en sandwich, le volet (1) comportant un coeur résistant à la pression.
